# EUROPEAN PATENT SPECIFICATION

(11) **EP 2 389 424 B1**
(45) Date of publication and mention of the grant of the patent: **22.08.2018**
(21) Application number: 10701085.2
(22) Date of filing: 18.01.2010
(51) Int. Cl.: C09K 3/18, C09K 3/22, C10L 9/12

(54) **METHODS AND COMPOSITIONS FOR DUST CONTROL AND FREEZE CONDITIONING**
VERFAHREN UND MITTEL ZUR STAUBBEKÄMPFUNG UND GEFRIERKONDITIONIERUNG
PROCÉDÉS ET COMPOSITIONS ANTI-POUSSIÈRE ET ANTIGEL

(30) Priority: 20.01.2009 US 356352
(43) Date of publication of application: 30.11.2011
(73) Proprietor: Nalco Company, Naperville, IL 60563-1198 (US)
(72) Inventor: TRAN, Bo, Illinois 60614 (US); BLUBAUGH, Stephen, Illinois 60563 (US)
(74) Representative: HGF Limited
(86) International application number: PCT/US2010/021298
(87) International publication number: WO 2010/085435

(56) References cited:
- US-A- 4 847 067
- US-A1- 2006 284 137
- US-A1- 2008 006 794
- US-A1- 2008 017 829

## Description

### Background of the Invention

This invention relates to dust control and freeze conditioning. More particularly, this invention concerns dust control and freeze conditioning compositions comprising a bottom stream from a biodiesel manufacturing process or transesterification reactions involving triglycerides and method of using the bottom stream.

Dust from traffic on dirt roads and from the handling of particulate products can create significant health, environmental and safety problems. At mining facilities, industrial sites and construction sites, operations may be significantly restricted by dust cloud formation. In addition, dust can adversely affect human health and the environment.

Known dust-controlling agents include oils, papermaking byproducts such as ligno-sulfonate dispersions, and water, and optionally contain various salts such as magnesium and calcium chloride, or sodium chloride. These products can freeze in sub-freezing weather.

Dust problems can persist even in subfreezing temperatures. It is desirable to utilize cost-effective dust control agents that are green, that are derived from renewable sources, and that will not be affected by sub-freezing weather.

In particulate and/or aggregate handling operations, freezing weather can halt operations. For example, coal can carry a significant amount of moisture. The moisture on the surface of the coal and in the coal, when frozen, causes the chunks of coal to agglomerate into large, unwieldy lumps, creating a handling problem. The coal can also freeze to the walls of hopper cars and railroad cars that are used to transport the coal, which further causes a material handling problem. It would be desirable to identify an economical and highly-effective freeze conditioning agent that also is green and derived from renewable sources.

Deicing and anti-icing compositions comprising glycerol-containing by-products of triglyceride processing processes are disclosed in Patent No. 6,890,451. Deicing and anti-icing compositions comprising short-chain polyols including glycerol and various wetting agents, antioxidants/preservatives, buffers, and/or freeze point depressants are disclosed in US Published Patent Application 2005/0087720 A1.

US Patent Numbers 6,878,308 and 6,416,684 disclose using molasses solids or sugar/de-sugared solutions to prevent freeze clumping of aggregate solids, and in anti-icing and de-icing applications. US Patent Numbers 7,108,800 and 7,398,935 disclose glycerin-containing by-product derived from transesterification processes. The glycerin-containing by-product contains about 45 to about 90 weight percent glycerin. US Patent 6,589,442, discloses that a partially saponified mixture of crude tall oil and vegetable oil, emulsified in water, can be used as a dust control agent. US Patent 5,079,036 discloses a method if inhibiting freezing and improving flow and handleability characteristics of solid, particular materials, utilizing foam comprised of a brine solution.

US 2006/284137 discloses dust control and/or freeze control compositions and methods of using the compositions. The dust control and/or freeze control compositions can comprise one or more glycerin by-products derived from a biodiesel manufacturing process. The dust control and/or freeze control compositions can also comprise one or more glycerin by-products of transesterification reactions involving triglycerides.

US 4847067 discloses a mold and dust inhibiting composition which has particular utility in connection with the storage and handling of animal feeds, grains, and hay, and also in connection with the use of animal litter such as poultry litter, as well as having general utility for controlling both mold and dust. The composition is an aqueous solution of one or more salts of propionic acid, one or more deliquescent substances, and also preferably one or more humectants.

### Brief Summary of the Invention

The invention is directed towards a method of inhibiting the agglomeration of a particulating material exposed to subfreezing temperatures as set out in claim 1.

The invention utilizes bottoms that can be derived from distillation processes, including distillation bottoms from the manufacture of biodiesel. The bottom stream contains 15 to 25 weight percent glycerin.

Disclosed but not claimed are dust control and/or freeze conditioning compositions comprising a bottom stream from a biodiesel manufacturing process or transesterification reactions involving triglycerides. The dust control and freeze conditioning compositions are cost-effective, green and derived from renewable sources.

Disclosed but not claimed is a method of preventing the agglomeration of a particulate material and the adhesion thereof to surfaces upon exposure of the material to subfreezing temperatures comprising a) providing unagglomerated particulate material; b) providing a composition comprising a bottom stream formed from a manufacturing process for making fatty acid esters from at least one oil selected from the group consisting of vegetable oil, plant oil, and animal fats; and c) applying said composition to the unagglomerated particulate material in an amount sufficient to suppress agglomeration of the particulate material and its adhesion to surfaces upon exposure of the particulate material to said subfreezing temperatures.

Disclosed but not claimed is a method of preventing the generation of dust from particulate materials comprising a) providing a particulate material; b) providing a composition comprising a bottom stream formed from a manufacturing process for making fatty acid esters from at least one oil selected from the group consisting of vegetable oil, plant oil and animal fats; and c) applying said composition to the particulate material an amount effective to wet the surface of the material and substantially prevent the generation of dust from the particulate material.

Disclosed but not claimed are dust control compositions comprising a bottom stream from a biodiesel manufacturing process or transesterification reactions involving triglycerides, wherein the compositions are applied as a foam.

Disclosed but not claimed is a method of preventing the generation of dust from a dirt road comprising a) providing a dirt road; b) providing a composition comprising a bottom stream formed from a manufacturing process for making fatty acid esters from at least one oil selected from the group consisting of vegetable oil, plant oil and animal fats; and c) applying said composition to the dirt road in an amount effective to wet the surface of the dirt road and substantially prevent the generation of dust from the dirt road.

The invention is further directed towards a method of controlling the generation of dust from a surface bearing particulate material in accordance with claim 7.

### Detailed Description of the Invention

This invention uses a bottom stream of transesterification reactions involving triglycerides including biodiesel manufacturing processes to prevent the agglomeration and adhesion of particulate materials to surfaces in subfreezing temperatures, to suppress the generation of dust from particulate materials and dirt roads. The bottom stream obtained as described herein is cost effective, green, and /or derived from renewable sources. For purposes of this application, the definition of "green" is a non-hazardous, non-toxic, material which has a low or non-detrimental impact on the environment, and may be biodegradable.

For purpose of this application, the definition of "freeze conditioning agent " is a process or composition of matter, which inhibits the agglomeration of materials when exposed to freezing temperatures. Freeze conditioning agents, can be mixed with other freeze conditioning agents, de-icing agents, and/or anti-icing agents.

For purposes of this application, the definition of "bottom stream" is the residue of a distillation, refinement, separation, or filtration process of a biodiesel manufacturing process, or of a transesterification reaction involving triglycerides, or of a glycerin refining process.

For purposes of this application, the definition of "Transesterification reactions involving triglycerides" is the splitting of triglyceride esters derived from vegetable oils, plant oils, and/or animal fats in the presence of base and a monohydroxy alcohol such as methanol or ethanol to produce monoesters of the fatty acids comprising the original triglycerides.

For purposes of this application, the definition of "particulating material" is a material that has a tendency to form dust particles when handled, processed, or contacted, which includes but is not limited to coal, dirt, wood chips, agricultural products, fruits, fertilizers, ores, mineral ores, fine materials, sand, gravel, soil, fertilizers, or other dust generating material, and any combination thereof.

For purposes of this application, the definition of "agglomerated particulating material" is a mass comprising one or more particulating materials that has become agglomerated into a unitary solid through a freezing or other agglomeration process.

For purposes of this application, the definition of "unagglomerated particulating material" is a mass comprising one or more particulating materials that has not become agglomerated into a unitary solid through a freezing or other agglomeration process.

For purposes of this application, the definition of "dosage" is how much of a particular composition of matter is added, "dosage" is distinct from "concentration".

For purposes of this application, the definition of "surfactant' is any substance used to lower the surface tension of another substance. In an embodiment the present invention is blended with a surfactant to promote foam generation.

For purposes of this application, the definition of "concentration" is the ratio of an added first composition of matter relative to a solvent, dispersant, or other second composition of matter that the first composition of matter is mixed with, "concentration" is distinct from "dosage".

Triglycerides, the principal components of animal fats and of vegetable or plant oils, are esters of glycerol, a trihydric alcohol, with different fatty acids of varying molecular weight associated with the particular fat or oil. The most common fatty acids are sourced from natural fats and oils include palmitic, stearic and linoleic acid. Representative fats and oils used in the transesterification reactions described herein include tallow, crude tall oil, vegetable oils, soy, mustard, canola, corn, coconut, rapeseed, palm, poultry offal, fish oils, used cooking oils, yellow grease, white grease, and/or trap grease, and the like. Plant oils include algae, jatropha, and the like.

In at least one embodiment, the bottom stream is derived from a biodiesel manufacturing process.

For purposes of this application, the definition of "biodiesel" is a diesel replacement fuel made from natural, renewable sources which is cleaner-burning than diesel fuel. Biodiesel can include fatty acid alkyl esters used as a cleaner-burning diesel replacement fuel made from sources such as new and used vegetable oils, plant oils and/or animal fats.

Biodiesel is typically made through a chemical process called transesterification in which vegetable oil, plant oil, or animal fats are converted to fatty acid alkyl esters and glycerin by-products. In certain biodiesel or transesterification process a bottom stream is generated. This bottom stream contains residues of the process.

Fatty acids and fatty acid alkyl esters can be produced from oils and fats by base-catalyzed transesterification of the oil, direct acid-catalyzed esterification of the oil and conversion of the oil to fatty acids and subsequent esterification to biodiesel.

The majority of fatty acid alkyl esters are produced by the base-catalyzed method. In general, any base may be used as the catalyst used for transesterification of the oil to produce biodiesel, however sodium hydroxide or potassium hydroxide are used in most commercial processes.

The bottom stream typically comprises one or more components selected from a group consisting of methyl esters, carbohydrates, glycerin, salt, iron, phosphorus, and sulfur. In at least one embodiment, methyl esters are present in an amount of 40 to 60 percent.

Typical inorganic salts include, for example, salts (e.g. chlorides and sulfates) of sodium, potassium and/or calcium. In an embodiment, the bottom stream can contain 10 to 30 weight percent of the inorganic salts. In an embodiment, the inorganic salts are selected from sodium and potassium chloride and mixtures thereof.

In an embodiment, the bottom stream comprises 15 to 25 weight percent glycerin, 0.1 to 2 weight percent water and 5 to 15 weight percent glycerides.

The bottom stream may optionally be diluted with a suitable diluent to reduce the cost per square meter of surface being treated. A preferred diluent is water. The amount of diluent may vary with the conditions, and may be determined at the site of use, depending upon the nature of the particulate matter (dirt roads, coal piles, sand piles, or the like) and the temperature at time of application.

In at least one embodiment, the bottom stream is diluted with 10 to 400 weight percent water, based on the weight of said by-product.

It has been discovered that application of compositions comprising the bottom stream described herein effectively prevent the agglomeration of particulate materials and adhesion of the particulate materials to surfaces upon exposure to subfreezing temperatures. This phenomena, is referred to as "freeze conditioning".

Without being limited by theory, it is believed that freeze conditioning results from a weakening of the bonds between forming ice crystals due to the bottom stream and other impurities contained in the by-product, thereby preventing agglomeration of the particulate material into a solid mass. Thus, although water contained in the particulate material is frozen in a typical application, the particulate material does not freeze into a unified solid mass.

Freeze conditioning is therefore distinct from de-icing or anti-icing. For purposes of this application, the definition of "de-icing" is a process in which formed ice is converted to water by depressing the freezing point depression of the ice. For purposes of this application, the definition of "anti-icing" is a process in which an agent is applied to a surface or material to prevent formation of ice when the surface or material is contacted by precipitation. Most importantly, the dosage required for freeze conditioning is substantially lower than the dosage required for de-icing or anti-icing.

By way of example, 907 kg (a ton) of coal may contain 8% (72 kg (160 pounds)) of water. In order to reduce the freezing point of the water to -28 °C (-25 °F), the coal would have to be treated with 38 kg (85 pounds) of pure glycerin. By contrast, agglomeration of the coal at the same temperature can be effectively prevented by applying a composition containing 0.94-1.36 kg (2-3 pounds) of the bottom stream as described herein to the unagglomerated coal. This example demonstrates that although the moisture contained in the coal treated according to this invention is frozen, the coal remains unagglomerated and manageable at a fraction of the dosage required for deicing.

Accordingly, at least one embodiment is a method of preventing the agglomeration of particulate material, such as coal, wood chips, agricultural products, fruits, fertilizers, mineral ores, fine materials, or other aggregates, and the adhesion thereof to surfaces in subfreezing temperatures, which comprises applying to said particulate material the bottom stream while the particulate material is in an unagglomerated state in an amount effective to prevent agglomeration of the material upon exposure to subfreezing temperatures.

In a typical freeze control application, the bottom stream is diluted with water to provide a composition containing 50 weight percent of water.

For example, to prevent agglomeration of coal 0.94-1.89 litres (2 to 4 pints) of the bottom stream aqueous solution is applied per 907 kg (ton) coal. This dosage has been shown to effectively weaken the ice crystals to prevent agglomeration in subfreezing weather.

The composition is applied to the particulate material while it is in an unagglomerated, free-flowing state, for example by spraying onto the material as it is falling from a chute or being transported on a conveyor.

In some embodiments the composition is applied to the particulate material at a dosage of 0.47 litre (1 pint) to 3.78 litre (8 pints) of the bottom stream per 907 kg (ton) of particulate material, depending on whether the application is freeze-conditioning or dust control.

As described herein, this invention provides effective freeze conditioning, preventing freeze agglomeration of particulate materials, such as coal. An unexpected benefit of the bottom stream is its freeze point depressant property. The invention shows unexpected freeze point depressant characteristics. For example, a 50% aqueous solution of pure glycerin freezes at-27.2 °C (-17 °F). A 50% aqueous solution of a preferred formulation (8.5% glycerin) of this invention did not freeze at-23 °C (about -10 °F). Thus, compositions of this invention may be used even under extreme winter conditions as an anti-agglomerating/adhesion agent as the composition will not freeze during storage or application.

In at least one embodiment, the bottom stream has a freezing point of at least -20°C.

Compositions of this invention also control dust through their inherent binding and humectant properties. Accordingly, in some embodiments, this invention provides methods of preventing the generation of dust from particulate materials comprising adding an amount of the bottom stream composition effective to wet the surface of the particulate material and prevent the generation of dust.

In at least one embodiment, the particulate materials are selected from coal, ores, wood chips, sand, gravel, soil, dirt, agricultural products, fertilizers, and other fine materials that can generate dust when handled or processed.

In at least one embodiment, this invention provides methods of preventing the generation of dust from dirt roads comprising adding an amount of the bottom stream composition effective to wet the surface of the road and prevent the generation of dust.

In at least one embodiment, dust is controlled with a dosage of bottom stream that is diluted with water. In at least one application dust is controlled with a dosage of bottom stream that is not diluted with water. The water concentration in the applied dosage can range from 0 to 90 weight percent.

In dust control embodiments, the composition is applied to the particulate material at a dosage of 0.94 litre (1 quart) to 3.78 litre (1 gallon) of the bottom stream per 907 kg (ton) of particulate material.

In at least one dust control embodiment, the composition is applied as a foam. In another embodiment one or more surfactant can be added to the composition to aid foam generation.

For application to dirt roads, the composition may be applied to the road at a dosage of 0.47 litre (1 pint) to 3.78 litre (8 pints) of the bottom stream per 0.84 square metre (square yard) of road surface. Heavy traffic requires a higher dosage.

The foregoing may be better understood by reference to the following examples, which are presented for purposes of illustration and are not intended to limit the scope of the invention.

### Example 1: Dust Control

The bottom stream was obtained from a biodiesel synthesis process. In this embodiment, the bottom stream component comprises 17 weight percent of glycerin, with the balance containing mainly carbohydrates, methyl esters, and salt. The product was diluted with 100 weight percent of water to provide a 50% solution of the bottom stream. The composition was applied to a dusty road at a dosage of one quart per square yard.

The diluted, bottom stream was highly effective in reducing dust generation from passing vehicles. Generation of road dust was further prevented for two weeks before a maintenance application was needed. Current industry practice is to use water or salt to control road dust. These applications are effective but they last only from an hour up to several days before another application is required. Treatment according to this invention can last weeks.

This completes the description of the preferred and alternate embodiments of the invention. Those skilled in the art may recognize other equivalents to the specific embodiment described herein which equivalents are intended to be encompassed by the claims attached hereto.

## Claims

1. A method of inhibiting the agglomeration of a particulating material exposed to subfreezing temperatures comprising:
(a) providing a composition comprising a bottom stream formed from a manufacturing process for making fatty acid esters from at least one oil selected from the group consisting of vegetable oils, plant oils and animal fats, wherein the bottom stream comprises 15 to 25 weight percent glycerine and 5 to 15 weight percent glycerides; and
(b) applying said composition to a particulating material in an amount sufficient to suppress agglomeration of the particulating material wherein the glycerin dosage is less than 200 grams per 907 kg (ton) of particulate material, wherein the glycerin dosage is substantially less than required for de-icing the particulating material with pure glycerin, and wherein the glycerin dosage is substantially less than is required for anti-icing the particulating material with pure glycerin.

2. The method of claim 1 wherein said manufacturing process is a biodiesel manufacturing process of forming fatty acid esters from vegetable oils, plant oils, and/or animal fats.

3. The method of claim 1 wherein said by-product has a freezing point of at least -20°C.

4. The method of claim 3 wherein said composition is applied to the particulate material at a dosage of 0.47 litres (about 1 pint) to 1.89 litres (4 pints) of the bottom stream per 907 kg (ton) of particulate material.

5. The method of claim 1 wherein said composition further comprises, a freeze point depressant, a de-icing agent, an anti-icing agent, methyl esters, carbohydrates, glycerin, salt, iron, phosphorus, sulfur, another freeze conditioning agent, and any combination thereof.

6. The method of claim 5 wherein the freeze conditioning agents or freeze point depressants is selected from the group consisting of diethylene glycol, propylene glycol, ethylene glycol, molasses solids, sugar, de-sugared solutions, and any combination thereof.

7. A method of controlling the generation of dust from a surface bearing particulate materials comprising:
(a) providing a composition comprising a bottom stream formed from a manufacturing process for making fatty acid esters from at least one oil selected from the group consisting of vegetable oils, plant oils and animal fats, wherein the bottom stream comprises 15 to 25 weight percent glycerine and 5 to 15 weight percent glycerides; and
(b) applying said composition to the surface an amount sufficient to suppress the generation of dust wherein the glycerin dosage is less than 200 grams per 907 kg (ton) of particulate material, wherein the glycerin dosage is less than 200 grams of glycerin per 0.84 square metre (square yard) of road surface, wherein the glycerin dosage is substantially less than is required for de-icing the surface with pure glycerin, and wherein the glycerin dosage is substantially less than is required for anti-icing the surface with pure glycerin.

8. The method of claim 7 wherein the particulate materials are positioned on a road.

9. The method of claim 8 wherein said composition is applied to the particulate material at a dosage of 0.47 litres (1 pint) to 3.79 litres (8 pints) of the bottom stream per 0.84 square metre (square yard) of road surface.

10. The method of claim 7 wherein said manufacturing process is a biodiesel manufacturing process of forming fatty acid esters from vegetable oils, plant oils, and/or animal fats.

11. The method of claim 1 wherein a surfactant is added to the composition.

12. The method of claim 1 wherein said composition is applied as a foam.

13. The method of claim 7 wherein said particulate material is selected from the list consisting of: dust, coal, wood chips, mineral ores, agricultural products, fertilizers, fruits, aggregates, clay, other fine materials, and any combination thereof.

## Patentansprüche

1. Verfahren zum Inhibieren der Agglomeration eines zerfallenden Materials, das an Temperaturen unter dem Gefrierpunkt ausgesetzt ist, umfassend:
(a) Bereitstellen einer Zusammensetzung, umfassend ein Bodenstrom aus einem Herstellungsverfahren zur Herstellung von Fettsäureestern aus mindestens einem Öl, das ausgewählt ist aus der Gruppe bestehend aus pflanzlichen Ölen, Pflanzenölen und tierischen Fetten, wobei der Bodenstrom 15% bis 25 Gew.% Glycerin und 5% bis 15 Gew.% Glyceride umfasst, und
(b) Aufbringen der Zusammensetzung auf ein zerfallendes Material in einer ausreichenden Menge, um Agglomeration des zerfallenden Materials zu unterdrücken, wobei die Glycerin-Dosis kleiner ist als 200 Gramm pro 907 kg (Tonne) des partikulären Materials, wobei die Glycerin-Dosis wesentlich kleiner ist als zum Enteisen des zerfallenden Materials mit reinem Glycerin erforderlich ist, und wobei die Glycerin-Dosis wesentlich kleiner ist als für Anti-Vereisung des zerfallenden Materials mit reinem Glycerin erforderlich ist.

2. Verfahren nach Anspruch 1, wobei das Herstellungsverfahren ein Biodiesel-Herstellungsverfahren zum Bilden von Fettsäureestern aus pflanzlichen Ölen, Pflanzenölen und/oder tierischen Fetten ist.

3. Verfahren nach Anspruch 1, wobei das Nebenprodukt einen Gefrierpunkt von mindestens -20 °C aufweist.

4. Verfahren nach Anspruch 3, wobei die Zusammensetzung auf das partikuläre Material in einer Dosis von 0,47 Liter (etwa 1 Pint) bis 1,89 Litern (4 Pints) des Bodenstroms pro 907 kg (Tonne) von partikulärem Material aufgebracht wird.

5. Verfahren nach Anspruch 1, wobei die Zusammensetzung ferner umfasst: einen Gefrierpunkterniedriger, ein Enteisungsmittel, ein Anti-Vereisungsmittel, Methylester, Kohlenhydrate, Glycerin, Salz, Eisen, Phosphor, Schwefel, anderes Gefrierkonditionierungsmittel und beliebige Kombinationen davon.

6. Verfahren nach Anspruch 5, wobei die Gefrierkonditionierungsmittel oder Mittel zur Gefrierpunktserniedrigung ausgewählt sind aus der Gruppe bestehend aus Diethylenglykol, Propylenglykol, Ethylenglykol, Melasse-Feststoffen, Zucker, entzuckerten Lösungen und beliebigen Kombinationen davon.

7. Verfahren zum Bekämpfen der Erzeugung von Staub von einer partikuläres Material tragenden Oberfläche, umfassend:
(a) Bereitstellen einer Zusammensetzung, umfassend einen Bodenstrom, der gibildet wird aus einem Herstellungsverfahren zur Herstellung von Fettsäureestern aus mindestens einem Öl, das ausgewählt aus der Gruppe bestehend auspflanzlichen Ölen, Pflanzenölen und tierischen Fetten, wobei der Bodenstrom 15% bis 25 Gew.% Glycerin und 5% bis 15 Gew.% Glyceride umfasst; und
(b) Auftragen der Zusammensetzung auf die Oberfläche in einer Menge, die ausreichend ist, die Erzeugung von Staub zu unterdrücken, wobei die Glyzerin-Dosis kleiner ist als 200 Gramm pro 907 kg (Tonne) des partikulären Materials, wobei die Glycerin-Dosis kleiner ist als 200 g Glyzerin pro 0,84 m² (square yard) Straßenoberfläche, wobei die Glycerin-Dosis wesentlich kleiner ist als zum Enteisen der Oberfläche mit reinem Glyzerin erforderlich ist, und wobei die Glycerin-Dosis wesentlich kleiner ist als zur Anti-Vereisung der Oberfläche mit reinem Glyzerin erforderlich ist.

8. Verfahren nach Anspruch 7, wobei die partikulären Materialien auf einer Straße positioniert sind.

9. Verfahren nach Anspruch 8, wobei die Zusammensetzung auf das partikuläre Materialien mit einer Dosis von 0,47 Liter (1 Pint) bis 3,79 Liter (8 Pints) des Bodenstroms pro 0,84 Quadratmeter (square yard) der Straßenoberfläche aufgebracht wird.

10. Verfahren nach Anspruch 7, wobei das Herstellungsverfahren ein Biodiesel-Herstellungsverfahren zum Bilden von Fettsäureestern aus pflanzlichen Ölen, Pflanzenölen und/oder tierischen Fetten ist.

11. Verfahren nach Anspruch 1, wobei der Zusammensetzung ein Tensid hinzugegeben wird.

12. Verfahren nach Anspruch 1, wobei die Zusammensetzung als ein Schaum aufgetragen wird.

13. Verfahren nach Anspruch 7, wobei das partikuläre Material ausgewählt ist aus der Liste bestehend aus: Staub, Kohle, Holzspänen, Mineralerzen, landwirtschaftlichen Produkten, Düngemitteln, Früchten, Zuschlagstoffen, Ton, anderen Feinmaterialien und beliebigen Kombinationen davon.

## Revendications

1. Procédé permettant d'inhiber l'agglomération d'un matériau particulaire exposé à des températures inférieures au point de congélation comprenant :
(a) la fourniture d'une composition comprenant un courant de fond formé à partir d'un processus de fabrication permettant de préparer des esters d'acides gras à partir d'au moins une huile choisie parmi l'ensemble constitué d'huiles végétales, d'huiles de plantes et de graisses animales, le courant de fond comprenant de 15 à 25 % en poids de glycérine et de 5 à 15 % en poids de glycérides ; et
(b) l'application de ladite composition sur un matériau particulaire en quantité suffisante pour supprimer l'agglomération du matériau particulaire, le dosage de glycérine étant inférieur à 200 grammes pour 907 kg (tonne) de matériau particulaire, le dosage de glycérine étant sensiblement inférieur à celui requis pour le déglaçage du matériau particulaire avec de la glycérine pure et le dosage de glycérine étant sensiblement inférieur à celui requis pour le dégivrage du matériau particulaire avec de la glycérine pure.

2. Procédé selon la revendication 1, dans lequel ledit processus de fabrication est un processus de fabrication de biodiesel permettant de former des esters d'acides gras à partir d'huiles végétales, d'huiles de plantes et/ou de graisses animales.

3. Procédé selon la revendication 1, dans lequel ledit sous-produit a un point de congélation d'au moins -20 °C.

4. Procédé selon la revendication 3, dans lequel ladite composition est appliquée sur le matériau particulaire à un dosage de 0,47 litre (environ 1 pinte) à 1,89 litres (4 pintes) du courant de fond pour 907 kg (tonne) de matériau particulaire.

5. Procédé selon la revendication 1, dans lequel ladite composition comprend en outre un agent réducteur du point de congélation, un agent de déglaçage, un agent de dégivrage, des esters méthyliques, des hydrates de carbone, de la glycérine, du sel, du fer, du phosphore, du soufre, un autre agent de conditionnement de gel et n'importe quelle combinaison de ceux-ci.

6. Procédé selon la revendication 5, dans lequel les agents de conditionnement du gel ou les agents réducteurs du point de congélation sont choisis parmi l'ensemble constitué du diéthylène glycol, du propylène glycol, de l'éthylène glycol, de solides de mélasse, du sucre, de solutions désucrées et de n'importe quelle combinaison de ceux-ci.

7. Procédé permettant de contrôler la génération de poussières à partir d'une surface supportant des matériaux particulaires comprenant :
(a) la fourniture d'une composition comprenant un courant de fond formé à partir d'un processus de fabrication pour préparer des esters d'acides gras à partir d'au moins une huile choisie parmi l'ensemble constitué d'huiles végétales, d'huiles de plantes et de graisses animales, le courant de fond comprenant de 15 à 25 % en poids de glycérine et de 5 à 15 % en poids de glycérides ; et
(b) l'application de ladite composition à la surface en une quantité suffisante pour supprimer la génération de poussières, le dosage de glycérine étant inférieur à 200 grammes pour 907 kg (tonne) de matériau particulaire, le dosage de glycérine étant inférieur à 200 grammes pour 0,84 mètre carré (yard carré) de surface de route, le dosage de glycérine étant sensiblement inférieur à celui requis pour le déglaçage de la surface par de la glycérine pure, le dosage de glycérine étant sensiblement inférieur à celui requis pour le dégivrage de la surface par de la glycérine pure.

8. Procédé selon la revendication 7, dans lequel les matériaux particulaires sont positionnés sur une route.

9. Procédé selon la revendication 8, dans lequel ladite composition est appliquée sur le matériau particulaire selon un dosage de 0,47 litre (1 pinte) à 3,79 litres (8 pintes) du courant de fond pour 0,84 mètre carré (yard carré) de surface de route.

10. Procédé selon la revendication 7, dans lequel ledit processus de fabrication est un processus de fabrication de biodiesel permettant de former des esters d'acides gras à partir d'huiles végétales, d'huiles de plantes et/ou de graisses animales.

11. Procédé selon la revendication 1, dans lequel un tensioactif est ajouté à la composition.

12. Procédé selon la revendication 1, dans lequel ladite composition est appliquée sous forme de mousse.

13. Procédé selon la revendication 7, dans lequel ledit matériau particulaire est choisi parmi la liste constituée de poussières, de charbon, de copeaux de bois, de minerais, de produits agricoles, d'engrais, de fruits, d'agrégats, d'argile, d'autres matériaux fins et de n'importe quelle combinaison de ceux-ci.
